# EUROPEAN PATENT APPLICATION

(11) **EP 0 898 230 A1**
(43) Date of publication of application: **24.02.1999**
(21) Application number: 97114195.7
(22) Date of filing: 18.08.1997
(51) Int. Cl.: G06F 13/38

(54) **Computer wireless receiver**

(71) Applicant: Chiu, Hung-Che, Taipei (TW)
(72) Inventor: Chiu, Hung-Che, Taipei (TW)
(74) Representative: Benedum, Ulrich Max, Dr.

(57) **Abstract**

A computer receiver is comprised of a power source, a converting device, a decoder, a microprocessor, a memory and other devices for connecting with the COM PORT of a general computer or a portable computer to receive and transfer data, wherein the power source regulating device is used for rectifying, filtering and regulating the DSR and RTS signals as the power source of a system; and the converting device is used for converting the received signal to the signal levels of 0V or 3V, the transferred signal is converted to the +4V or -4V signal levels, and the transferred signal is converted to the +4V or -4V of RS232 levels; thus the receiver will not required to add another external power source.

## Description

### Field of the invention

The present invention is related to a computer wireless receiver, especially, to a receiving device for being connected directly to the COM PORT of a computer without any external power source.

### Description of the prior art

Since the computer science is more and more popular, thus the computer may be used to process and operate complicated data, and moreover, by the receiving of the high frequency, the news and economic massage may be transferred by wireless communication and then is displayed and stored on said computer, another, it may be employed to transfer character massage and to remotely control a safety system. However, in general the high frequency circuit must has a better power source, and the signal on the carrier must be encoded and decoded so to attain a better data transformation. Therefore, the peripheral devices for a computer will occupy a large volume, thus if it is used in a portable computer or a personal P. D. A., apparently it is not a ideal device and also is not easy to carry and operate.

### Summary of the Invention

Accordingly, the object of the present invention is to provide a computer receiver comparing a power source, a converting device, a decoder, a microprocessor, a memory and other devices for connecting with the COM PORT of a general computer or a portable computer to receive and transfer data, wherein the power source regulating device is used for rectifying, filtering and regulating the DSR and RTS signals as the power source of a system; and the converting device is used for converting the received signal to the signal levels of 0V or 3V, the transferred signal is converted to the +4V or -4V signal levels, and the transferred signal is converted to the +4V or -4V of RS232 levels; thus the receiver will not required to add another external power source.

The present invention will be better understood and its numerous objects and advantages will become apparent to those skilled in the art by referencing to the following drawings in which:

### Brief Description of the Drawings:

Fig. 1 is a block diagram of the circuit of the present invention.
Fig. 2 is a diagram of the high frequency circuit of the present invention.
Fig. 3 is a circuit diagram of the receiving and power source parts of the present invention.

### Description of the Preferred Embodiment

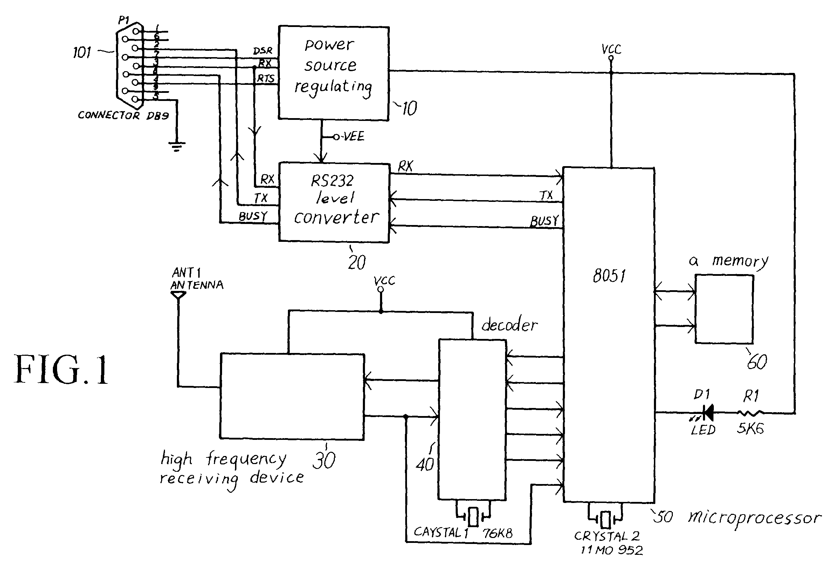

Now referring to Fig. 1, the present invention is mainly comprised of a power source regulating device (10), a converter (20), a high frequency receiving device (30), a decoder (40), a microprocessor (50), and a memory (60), the power source regulating device (10) is installed with a connector (101) for connecting with the COM PORT of a computer so to rectify, filter and regulate the DSR and RIS signals as a system power source.

After the wireless signal is received by the high frequency receiving device (30), and then it is compared and decoded by a decoder (40) for decoding address codes and message codes, next the received signal is transferred to the microprocessor (50) for operating the received signal, while the memory (60) connected therewith is employed for storing the sequential numbers, speeds, address codes and other system messages. The operated signal is transferred to a converter (20) so that the receiving (RX), transferring (TX) and busy signals will be converted to 0V, 3V, 4V and -4V signals of RS232 levels, thus the connector may connect with the COM PORT of a computer so that the data may input a main frame. Therefore, it will receive and transfer data without any external power source.

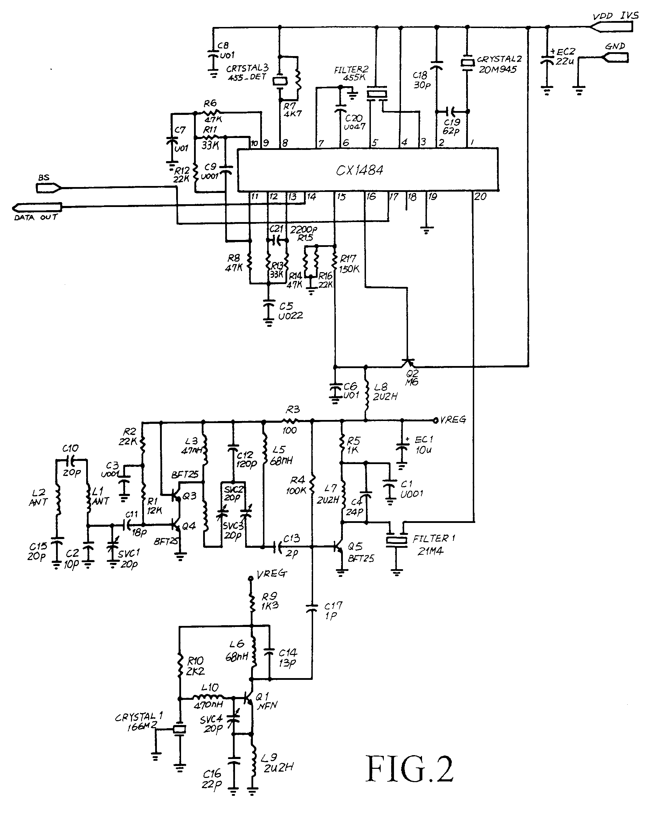

Now referring to Fig. 2, a part of the high frequency circuit of the present invention is shown. As shown in the figure, as an antenna (ANT) receives a high frequency signal, and the signal is amplified by a high frequency amplifier which is formed by Q3 and Q4, and then is further outputted to a filter formed by Q1 and other peripheral elements thereof, thus the frequency thereof is reduced to a medium frequency, and then it is transferred to a medium frequency IC (CXA1484) for converting to a medium signal of 455 KHz, finally it is detected and shaped to generate a NRZ digital signal.

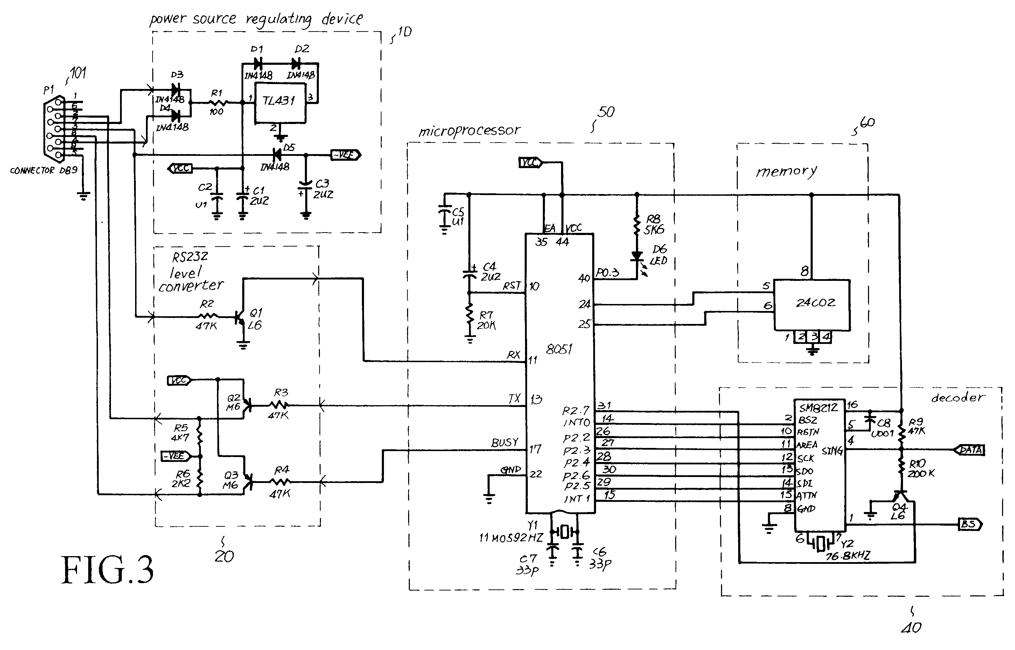

Now referring to Fig. 3, after said NRZ signal has been transferred to a decoder, the decoder will decode an address code and a message code, then the decoded data will be further transferred to a microprocessor (8051), then after operating by said microprocessor, it is transferred to a converting device by receiving, transferring and BUSY function.

Said converting device is comprised of a first, a second and a third transistors, wherein, the first transistor Q1 is used to receive a signal and then convert said signal to 0V or 3V levels, and the second transistor Q2 is used to transfer a signal and then convert said signal to +4V or -4V of RS232 levels so that it is transferred to a connector in said levels for further being connecting with the COM PORT of a computer.

In the power source regulating device connected on the connector, the voltages of the DSR and RST signals are rectified by diodes D3 and D4 and filtered by D5, C1 and C3, finally it is regulated by a regulating IC (TLA31), a steady working voltage is obtained as the power source of said system, while the whole receiving condition and the power supplying of RS232 may be clearly displayed on the light emitted diode (D6).

In the present invention, the power is supplied from a RS232 port without any other power source, and the frequency thereof may be selected within the ranges from 150Mhz to 170Mhz or from 270 MHz to 290 MHz, and meanwhile the present invention may process a set of control code and many sets of ID codes, wherein, the function of the control code is used to change the ID codes of a plurality of receivers, or to set the on \ off operation in any ID code, or to cut off any operation of the receivers and to correct the time or date within the plurality of receivers synchronously. While as required, said plurality of ID codes may be employed to receive different information and the transferred messages may be encoded in secret.

In summary, the power regulating and converting device of the present invention will cause that the receiver of a computer may directly use the power from a RS232 without any other external power source, thus the device will be more compact and portable.

Although certain preferred embodiment of the present invention has been shown and described in detail, it should be understood that various changes and modification may be made therein without departing from the scope of the appended claims.

## Claims

1. A computer receiver comprising:
a power source regulating device for rectifying, filtering and regulating the sequential signals (com1, com2,...) as the power source of a system, the a negative voltage is generated by the transferring signal of said computer for converting to the levels of RS232;
a converting device for converting the received signal to the signal levels of 0V or 3V, and the transferred BUSY signal being converted to the +4V or -4V of RS232 levels;
a decoder for decoding an address code and a message code;
a microprocessor for transferring the data of decoder after it has been converted; and
a memory for storing sequential numbers, speeds, address codes and other systematic data.

2. The computer receiver as claimed in claim 1, wherein the receiving and transferring of the converter and the BUSY signal are converted for deriving the signal levels of RS232.

3. The computer receiver as claimed in claim 1, wherein in the high frequency receiving device, a signal is received by an antenna, then it is amplified by a coupled first stage high frequency amplifier, and then is outputted to a mixer for converting to a medium frequency, 21.4 MHz; next, the signal is filtered and transferred to a medium integrated circuit to convert to a second medium signal, 455 KHz, finally, it is detected and shaped for generating a NRZ digital signal.

4. The computer receiver as claimed in claim 1, wherein the frequency thereof may be selected within the ranges from 150Mhz to 170Mhz or from 270 MHz to 290 MHz.

5. The computer receiver as claimed in claim 1, wherein the receiver may process a set of control code and many sets of ID codes.

6. The computer receiver as claimed in claim 1, wherein the microprocessor is connected with a light emitted diode so that the receiving condition and the power supplying of RS232 may be clearly displayed thereon.
